# EUROPEAN PATENT SPECIFICATION

(11) **EP 3 764 768 B1**
(45) Date of publication and mention of the grant of the patent: **12.01.2022**
(21) Application number: 18829299.9
(22) Date of filing: 17.12.2018
(51) Int. Cl.: A01G 3/025

(54) **CUTTING TOOL**
SCHNEIDWERKZEUG
OUTIL DE COUPE

(30) Priority: 16.03.2018 DE 102018002146
(43) Date of publication of application: 20.01.2021
(73) Proprietor: HUSQVARNA AB, 561 82 Huskvarna (SE)
(72) Inventor: KOHL, Peter, 89257 Illertissen (DE)
(74) Representative: Finkele, Rolf
(86) International application number: PCT/EP2018/085229
(87) International publication number: WO 2019/174775

(56) References cited:
- EP-A1- 3 065 531

## Description

### TECHNICAL FIELD

The present disclosure relates to a cutting tool, and more particularly to a structural aspect of the cutting tool.

### BACKGROUND

Generally, handheld machine tools, such as a pruning tool, may include a pruning head having one or more blades coupled to a handle. The handle may be used to hold the pruning tool during a pruning operation. In many situations, the pruning tool may be used in difficult to access or hard to reach locations, such as deep within bushes, raised locations above ground, and the like. In such a situation, it may be difficult to complete the pruning operation with required precision and quality.

Therefore, the pruning head may be pivotally coupled to the handle in order to provide rotational movement to the pruning head and, in turn, providing an improved operability range. However, in many situations, a structural design of the pruning head may limit a range of rotational movement thereof. Hence, there is need for an improved tool with improved range of movement for such applications. Generally, pruning tools are known from EP 3 065 531 A1 and EP 2 793 549 A1.

### SUMMARY

In view of the above, it is an objective of the present invention to solve or at least reduce the drawbacks discussed above. The objective is achieved by a cutting tool according to claim 1.

The cutting tool includes a longitudinal lever having a first end and a second end. The longitudinal lever defines a longitudinal axis extending between each of the first end and the second end. The cutting tool includes a handle portion defined towards the first end of the longitudinal lever. The cutting tool includes a pivot housing coupled to the second end of the longitudinal lever. The pivot housing is adapted to rotate about a pivot axis. The cutting tool also includes a pair of cutting blades coupled to the pivot housing such that the pair of cutting blades rotate about the pivot axis along with the pivot housing. The cutting tool further includes a coupling member adapted to couple the pivot housing with the second end of the longitudinal lever such that the pivot axis is disposed at an offset to the longitudinal axis. The offset between the pivot axis and the longitudinal axis allows the pair of cutting blades to be rotated to a position adjacent to the longitudinal lever. As such, the rotation of the pair of cutting blades adjacent to the longitudinal lever provides a substantially greater range of motion to the cutting tool, in turn, providing access to difficult to reach location, improved operational accuracy, ease of operation, reduced operator fatigue, and the like.

The pair of cutting blades include a support blade and a movable blade. As such, the pair of cutting blades provides a substantially scissor like cutting action for ease of cutting operation. Also, a single movable blade provides reduced constructional and/or manufacturing complexity, in turn, providing reduced product cost.

The cutting tool includes a cord and pulley mechanism provided in association with each of the longitudinal lever, the handle portion, the pivot housing, the pair of cutting blades, and the coupling member. The cord and pulley mechanism is adapted to provide a cutting action to the pair of cutting blades. As such, the cord and pulley mechanism allows operation of the pair of cutting blades from a distant location on the cutting tool, such as the handle portion provided on the longitudinal lever, in turn, provide ease of operation and usability.

The pivot axis is substantially perpendicular with respect to the longitudinal axis. The perpendicular orientation of the pivot axis with respect to the longitudinal axis allows rotation of the pivot housing with respect to the longitudinal member, in turn, providing an improved range of operability and ease of usability.

The cutting tool includes an angular range of rotation of the pair of cutting blades about the pivot axis greater than 200°. As such, the cutting tool provides an improved range of operability and ease of usability.

Other features and aspects of this disclosure will be apparent from the following description and the accompanying drawings.

### BRIEF DESCRIPTION OF THE DRAWINGS

The invention will be described in more detail with reference to the enclosed drawings, wherein:
**FIG. 1** shows a partial perspective view of a cutting tool;
**FIGS. 2A** and **2B** show a partial top view of the cutting tool;
**FIGS. 3A** and **3B** show partially exploded perspective views of the cutting tool;
**FIG. 4** shows another partially exploded perspective view of the cutting tool;
**FIGS. 5A** and **5B** show yet another partially exploded perspective views of the cutting tool.
**FIGS. 6A** and **6B** show yet another partially exploded perspective views of the cutting tool.

### DESCRIPTION OF EMBODIMENTS

The present disclosure will be described more fully hereinafter with reference to the accompanying drawings, in which example embodiments are shown.

The tool may, however, be embodied in many different forms and should not be construed as limited to the embodiments set forth herein; rather, these embodiments are provided so that this disclosure will be thorough and complete.

For example, one or more aspects can be utilized in other embodiments and even other types of structures and/or methods. In the drawings, like numbers refer to like elements.

Certain terminology is used herein for convenience only and is not to be taken as a limitation.

. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

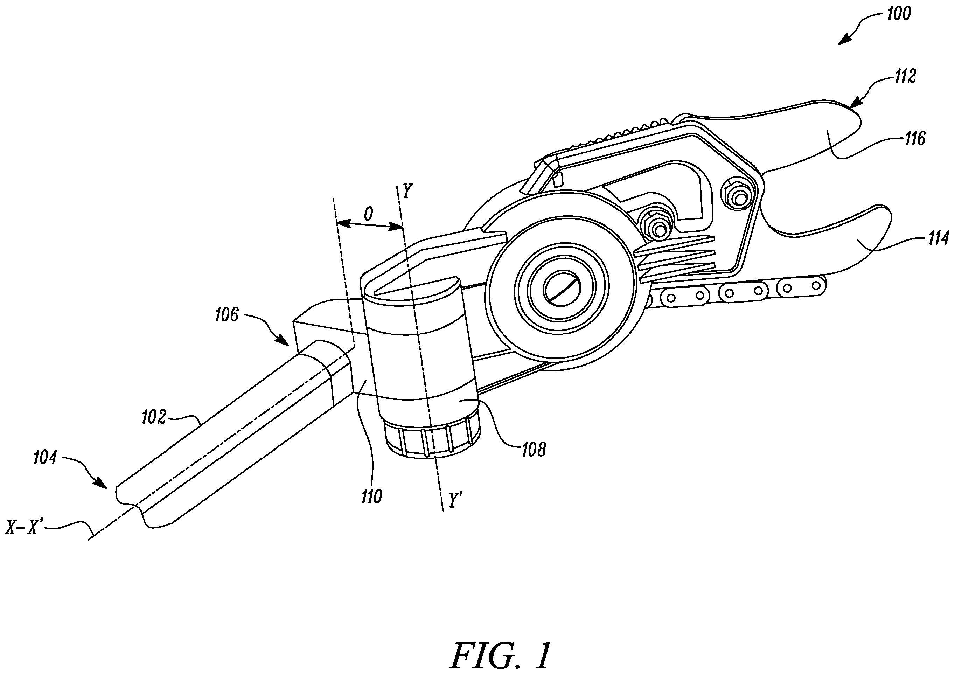

Referring to **FIG. 1**, a perspective view of a portion of a cutting tool **100** is illustrated. More specifically, the cutting tool **100** is a pruning tool or a lopper. The cutting tool **100** will be hereinafter interchangeably referred to as the "tool **100**". The tool **100** includes a longitudinal lever **102**. The longitudinal lever **102** includes a first end **104** and a second end **106**. The second end **106** is disposed opposite to the first end **104.** It should be noted that, in the illustrated figures, only a portion of the longitudinal lever **102** is shown for the purpose of clarity and explanation.

The longitudinal lever **102** defines a longitudinal axis **X-X'** thereof extending between each of the first end **104** and the second end **106.** The longitudinal lever **102** may include any configuration, such as cylindrical, elliptical, and the like based on application requirements. Also, the longitudinal lever **102** may be made of any material, such as, wood, metal, alloy, polymer, and the like. The tool **100** may also include a handle portion (not shown) provided on the first end **104** of the longitudinal lever **102.** The handle portion may be adapted to enable an operator to hold the tool **100** during a work operation.

The tool **100** includes a pivot housing **108** coupled to the longitudinal lever **102.** More specifically, the pivot housing **108** is coupled to the second end **106** of the longitudinal lever **102.** The pivot housing **108** defines a pivot axis **Y-Y'** thereof. Accordingly, the pivot housing **108** is adapted to rotate about the pivot axis **Y-Y'.** The pivot housing **108** is disposed on the second end **106** of the longitudinal lever **102** such that the pivot axis **Y-Y'** is disposed substantially perpendicular with respect to the longitudinal axis **X-X'.** Also, the pivot axis **Y-Y'** is disposed in a plane (not shown) different with respect to a plane (not shown) associated with the longitudinal axis **X-X'.**

The pivot housing **108** is coupled to the second end **106** of the longitudinal lever **102** via a coupling member **110.** Accordingly, the pivot housing **108** is adapted to pivot about the pivot axis **Y-Y'** and the coupling member **110.** In the illustrated embodiment, the coupling member **110** includes a substantially angled configuration. As such, one end of the coupling member **110** is coupled to the second end **106** of the longitudinal lever **102,** and another end of the coupling member **110** is coupled to the pivot housing **108.** Accordingly, the coupling member **110** is adapted to dispose the pivot axis **Y-Y'** at an offset **"O"** with respect to the longitudinal axis **X-X'.**

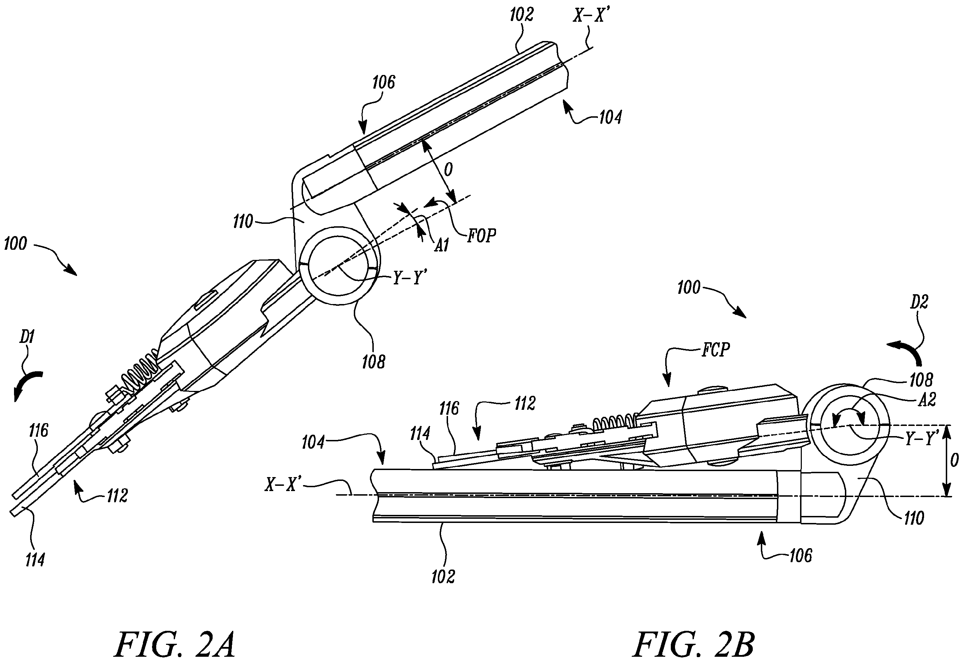

The tool **100** also includes a pair of cutting blades **112** coupled to the longitudinal lever **102.** More specifically, the pair of cutting blades **112** is coupled to the second end **106** of the longitudinal lever **102** via the pivot housing **108** and the coupling member **110.** Accordingly, the pair of cutting blades **112** is adapted to rotate about the pivot axis **Y-Y'** along with the pivot housing **108.** Referring to **FIGS. 2A** and **2B**, partial perspective views of the tool **100** in different operating positions is illustrated.

Referring to **FIG. 2A**, the tool **100** is shown in a fully open position "**FOP**"**.** In the fully open position "**FOP**", the pair of cutting blades **112** is adapted to rotate at a first angle "**A1**" away with respect to the longitudinal axis **X-X'** in a direction "**D1**". In the illustrated embodiment, the first angle "**A1**" measures approximately **25**°**.** Referring to **FIG. 2B**, the tool **100** is shown in a fully closed position "**FCP**"**.** In the fully closed position "**FCP**", the pair of cutting blades **112** is adapted to rotate at a second angle "**A2**" away with respect to the longitudinal axis **X-X**' in a direction "**D2**"**.**

In the illustrated embodiment, the second angle "**A2**" measures more than **180**°**.** Accordingly, the pair of cutting blades **112** may be rotated in a range of greater than **200**° between the fully open position "**FOP**" and the fully closed position "**FCP**"**.** In one embodiment, the second angle "**A2**" is more than 180° in particular **210**° **to 230**°**.** It should be noted that the angular values of rotation of the pair of cutting blades **112** related to the first angle "**A1**" and the second angle "**A2**" described herein are merely exemplary and may vary based on application requirements.

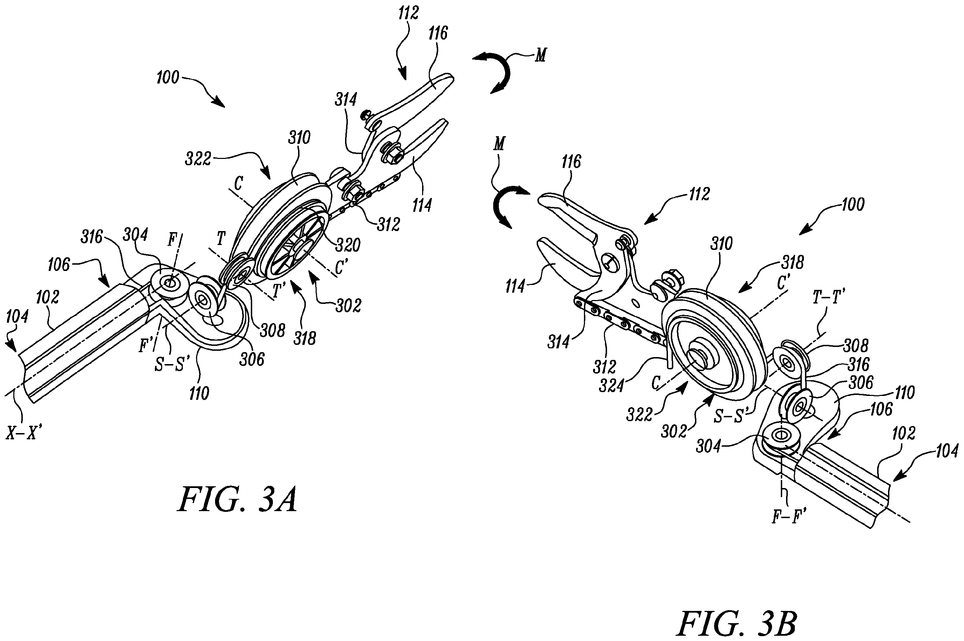

As such, the offset "**O**" between the pivot axis **Y-Y'** and the longitudinal axis **X-X'** allows the pair of cutting blades **112** to be rotated to a position adjacent to the longitudinal lever **102** in the fully closed position "**FCP**"**.** It should be noted that the pair of cutting blades **112** may be rotated and/or operated at any intermediate position between the fully open position "**FOP**" and the fully closed position "**FCP**"**.** For example, in one situation, the pair of cutting blades **112** may be oriented and operated at a normal position (shown in **FIGS. 3A** and **3B**) such that the pair of cutting blades **112** may be aligned with respect to the longitudinal axis **X-X'.**

Referring to **FIG. 1**, the pair of cutting blades **112** include two blades, such as a support blade **114** and a movable blade **116.** In the illustrated embodiment, the support blade **114** is fixedly coupled to the pivot housing **108.** The movable blade **116** is provided in association with and is pivotably coupled to the support blade **114.** Accordingly, movement of the movable blade **116** with respect to the support blade **114** provides a cutting action of the pair of cutting blades **112.** It should be noted that, in other embodiments, a position and/or an orientation of the support blade **114** and the movable blade **116** may be interchanged, or in some embodiments, each of the support blade **114** and the movable blade **116** may be movable with respect to one another.

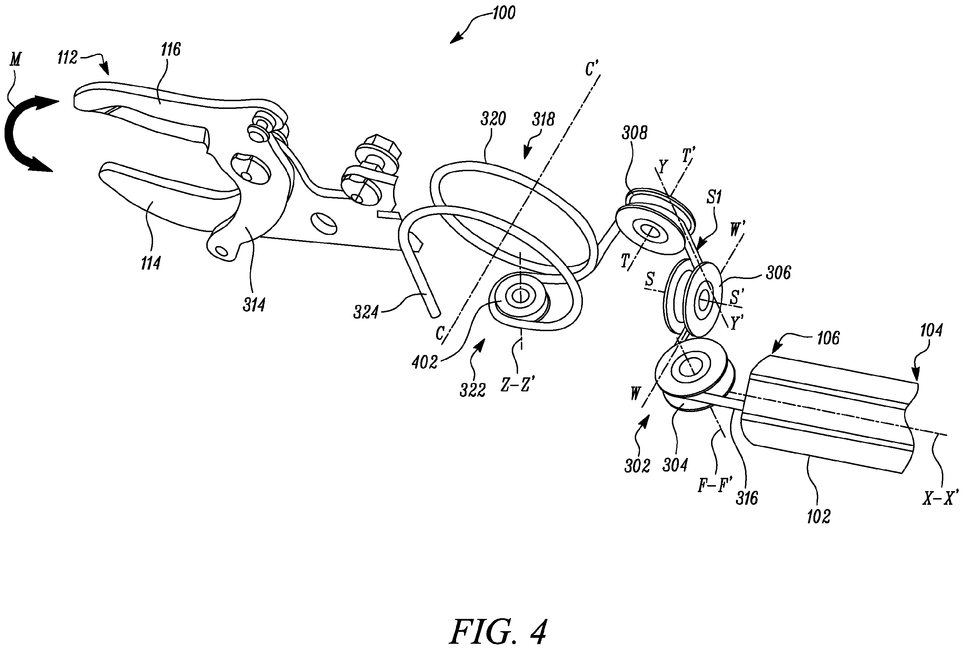

Referring to **FIGS. 3A**, **3B**, and **4**, different partially exploded perspective views of the tool **100** are illustrated. The tool **100** further includes a cord and pulley mechanism **302.** The cord and pulley mechanism **302** will be herein after interchangeably referred to as the "mechanism **302**"**.** The mechanism **302** is provided in association with each of the longitudinal lever **102**, the handle portion, the pivot housing **108**, the pair of cutting blades **112**, and the coupling member **110.** The mechanism **302** is adapted to provide the cutting action to the movable blade **116** of the pair of cutting blades **112.**

The mechanism **302** includes a first pulley **304** defining a first axis **F-F'** thereof. The first pulley **304** is disposed within the coupling member **110.** The first pulley **304** is disposed in a manner such that the first axis **F-F'** is substantially perpendicular with respect to the longitudinal axis **X-X'.** Also, the first axis **F-F'** is disposed in a plane (not shown) different with respect to the plane associated with the longitudinal axis **X-X'.** The first pulley **304** is adapted to rotate about the first axis **F-F'.**

The mechanism **302** includes a second pulley **306** defining a second axis S-**S'** thereof. The second pulley **306** is disposed adjacent to the first pulley **304** and within the coupling member **110.** The second pulley **306** is disposed in a manner such that the second axis **S-S'** is substantially perpendicular with respect to the first axis **F-F',** and substantially parallel with respect to the longitudinal axis **X-X'.** Also, the second axis **S-S'** is disposed in a plane (not shown) different with respect to the plane associated with each of the first axis **F-F'** and the longitudinal axis **X-X'.** The second pulley **306** is adapted to rotate about the second axis **S-S'.**

The mechanism **302** includes a third pulley **308** defining a third axis **T-T'** thereof. The third pulley **308** is disposed adjacent to the second pulley **306** and within the pivot housing **108.** The third pulley **308** is disposed in a manner such that the third axis **T-T'** is substantially perpendicular with respect to each of the first axis **F-F'** and the second axis **S-S'.** Also, the third axis **T-T'** is disposed in a plane (not shown) different with respect to the plane associated with each of the first axis **F-F'** and the second axis **S-S'.** The third pulley **308** is adapted to rotate about the third axis **T-T'.**

The mechanism **302** also includes a coil pulley **310** defining a coil axis **C-C'** thereof. The coil pulley **310** is disposed adjacent to the third pulley **308** and within the pivot housing **108.** The coil pulley **310** is disposed in a manner such that the coil axis **C-C'** is substantially parallel with respect to the third axis **T-T'.** Also, the coil axis **C-C'** is disposed in a plane (not shown) different with respect to the plane associated with the third axis **T-T'.** The coil pulley **310** is adapted to rotate about the coil axis **C-C'.**

The mechanism **302** further includes a fourth pulley **402** defining a fourth axis **Z-Z'** thereof. The fourth pulley **402** is disposed adjacent to the coil pulley **310** and within the pivot housing **108.** The fourth pulley **402** is disposed in a manner such that the fourth axis **Z-Z'** is substantially perpendicular with respect to the coil axis **C-C',** and substantially parallel with respect to the first axis **F-F'.** Also, the fourth axis **Z-Z'** is disposed in a plane (not shown) different with respect to the plane associated with each of the coil axis **C-C'** and the first axis **F-F'.** The fourth pulley **402** is adapted to rotate about the fourth axis **Z-Z'.**

The mechanism **302** also includes a chain member **312.** The chain member **312** is coupled to the coil pulley **310** and a linkage portion **314** associated with the movable blade **116.** The mechanism **302** further includes a cord **316.** The cord **316** is routed through the longitudinal lever **102** and is, at least partially, routed around each of the first pulley **304,** the second pulley **306,** and the third pulley **308.** The cord **316** is then routed along a first side **318** of the coil pulley **310** forming a first loop **320.** The cord **316** is then routed, at least partially, around the fourth pulley **402.** The cord **316** is further routed along a second side **322** of the coil pulley **310** forming a second loop **324.**

The cord **316** is also coupled to a handle lever (not shown) provided on the handle portion. Accordingly, based on an actuation of the handle lever, the cord **316** may be pulled, in turn, providing rotation of each of the first pulley **304**, the second pulley **306**, the third pulley **308**, the coil pulley **310**, and the fourth pulley **402.** Based on the rotation of the coil pulley **310**, the chain member **312** may translate, and actuate the linkage portion **314** and the movable blade **116.** As such, the rotation of the coil pulley **310** may be translated to the pivotal movement of the movable blade **116** in a direction "**M**" using the chain member **312** and the linkage portion **314.**

As illustrated, when the cord **316** passes from first pulley **304** to the second pulley **306**, the cord **316** defines an axis **W-W'.** The axis **W-W'** is orthogonal to the longitudinal axis **X-X'.** The axes **X-X'** and **W-W'** may lie in different planes, such that the two axes are perpendicular to each other. In other words, the cord **316** passes from the first pulley **304** to the second pulley **306** at an angle of **90°.** This allows the cord **316** to allow cutting action of the tool **100** without requiring any change in length of the cord **316.**

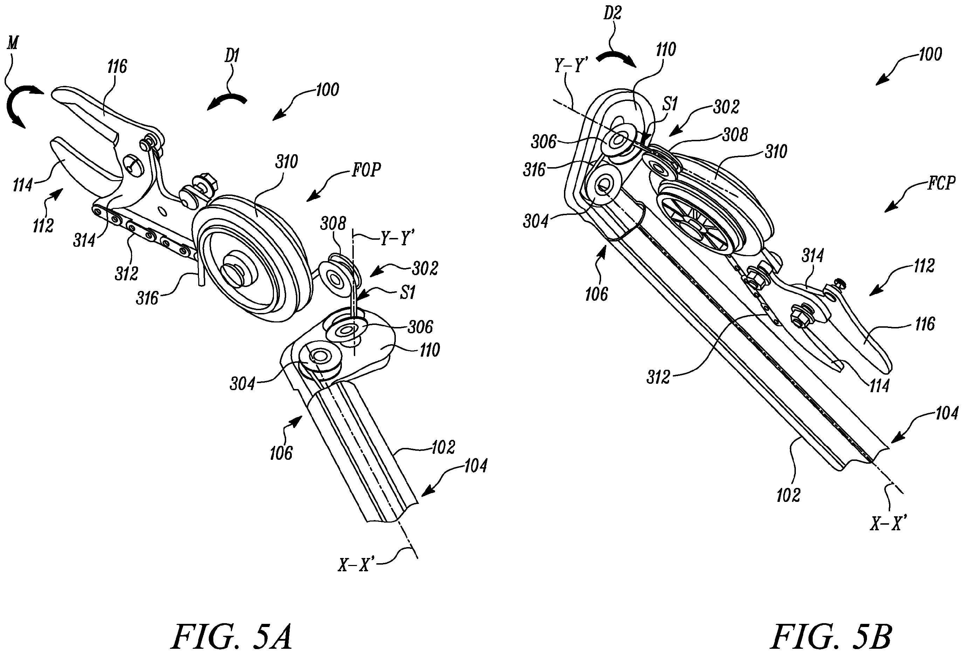

Referring to **FIGS. 5A** and **5B**, different partially exploded perspective views of the tool **100** are illustrated. A segment "**S1**" of the cord **316** routed between the second pulley **306** and the third pulley **308** coincides with the pivot axis **Y-Y'.** Accordingly, as shown in **FIG. 5A**, based on the rotation of the pair of cutting blades **112** toward the fully open position "**FOP**", the segment "**S1**" of the cord **316** rotates along the pivot axis **Y-Y'** to allow the rotation of each of the third pulley **308**, the coil pulley **310**, and the fourth pulley **402** along with the pivot housing **108.** Similarly, as shown in **FIG. 5B**, based on the rotation of the pair of cutting blades **112** toward the fully closed position "**FCP**", the segment "**S1**" of the cord **316** rotates along the pivot axis **Y-Y'** to allow the rotation of each of the third pulley **308**, the coil pulley **310**, and the fourth pulley **402** along with the pivot housing **108.**

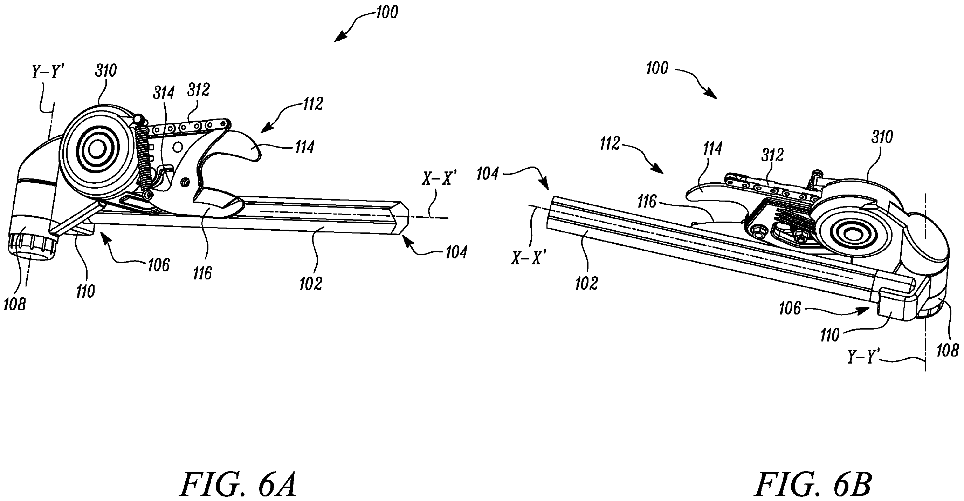

**FIGS. 6A** and **6B** show another embodiment of the present disclosure. Position of the two blades **114, 116** comprising the pair of blades **112** may be interchangeable. As compared to **FIGS. 5A** and **5B**, the movable blade **116** and the support blade **114** are shown in interchanged positions. The movable blade **116** is shown adjacent to the longitudinal lever **102.** This provides a safer configuration of the tool **100** for a user, as the movable blade **116** is positioned towards the longitudinal lever **102**, and potentially away from getting in contact with a user.

In the drawings and specification, there have been disclosed preferred embodiments and examples and, although specific terms are employed, they are used in a generic and descriptive sense only and not for the purpose of limitation of the scope of the invention being set forth in the following claims.

### LIST OF ELEMENTS

- **100**: Cutting Tool / Tool
- **102**: Longitudinal Lever
- **104**: First End
- **106**: Second End
- **108**: Pivot Housing
- **110**: Coupling Member
- **112**: Pair of Cutting Blades
- **114**: Support Blade
- **116**: Movable Blade
- **302**: Cord and Pulley Mechanism / Mechanism
- **304**: First Pulley
- **306**: Second Pulley
- **308**: Third Pulley
- **310**: Coil Pulley
- **312**: Chain Member
- **314**: Linkage Portion
- **316**: Cord
- **318**: First Side
- **320**: First Loop
- **322**: Second Side
- **324**: Second Loop
- **402**: Fourth Pulley
- **F-F'**: First Axis
- **S-S'**: Second Axis
- **T-T'**: Third Axis
- **C-C'**: Coil Axis
- **Z-Z'**: Fourth Axis
- **X-X'**: Longitudinal Axis
- **W-W'**: Axis
- **Y-Y'**: Pivot Axis
- **FOP**: Fully Open Position
- **FCP**: Fully Closed Position
- **A1**: First Angle
- **A2**: Second Angle
- **D1**: Direction
- **D2**: Direction
- **O**: Offset
- **M**: Direction
- **S1**: Segment

## Claims

1. A cutting tool (**100**) comprising:
a longitudinal lever (**102**) having a first end (**104**) and a second end (**106**), the longitudinal lever (**102**) defining a longitudinal axis (**X-X'**) extending between each of the first end (**104**) and the second end (**106**);
a handle portion defined towards the first end (**104**) of the longitudinal lever (**102**);
a pivot housing (**108**) coupled to the second end (**106**) of the longitudinal lever (**102**), the pivot housing (**108**) adapted to rotate about a pivot axis (**Y-Y'**); and
a pair of cutting blades (**112**) coupled to the pivot housing (**108**) such that the pair of cutting blades (**112**) rotate about the pivot axis (**Y-Y'**) along with the pivot housing (**108**);
wherein the cutting tool (**100**) further includes a coupling member (**110**) adapted to couple the pivot housing (**108**) with the second end (**106**) of the longitudinal lever (**102**) such that the pivot axis (**Y-Y'**) is disposed at an offset (**O**) to the longitudinal axis (**X-X'**), wherein the offset (**O**) between the pivot axis (**Y-Y'**) and the longitudinal axis (**X-X'**) allows the pair of cutting blades (**112**) to be rotated to a position adjacent to the longitudinal lever (**102**);
wherein further including a cord and a pulley mechanism (**302**) provided in association with each of the longitudinal lever (**102**), the handle portion, the pivot housing (**108**), the pair of cutting blades (**112**), and the coupling member (**110**), the cord and pulley mechanism (**302**) adapted to provide a cutting action to the pair of cutting blades (**112**)
and wherein the cord and pulley mechanism (**302**) further includes:
a first pulley (**304**) defining a first axis **F-F'** substantially perpendicular to the longitudinal axis **X-X'** and
a second pulley (**306**) defining a second axis **S-S'** substantially perpendicular to the first axis **F-F'** ,
**characterized in that:**
the cord and pulley mechanism (**302**) further includes:
a third pulley (**308**) defining a third axis **T-T'** that is substantially perpendicular with respect to each of the first axis **F-F'** and the second axis **S-S',**
whereby the cord (**316**) is routed through the longitudinal lever (**102**) and is, at least partially, routed around each of the first pulley (**304**), the second pulley (**306**) and the third pulley (**308**),
with a segment of the cord (**316**) routed between the second pulley (**306**) and the third pulley (**308**) coincides with the pivot axis **Y-Y'**.

2. The cutting tool (**100**) of claim 1, wherein the pair of cutting blades (**112**) include a support blade (**114**) and a movable blade (**116**).

3. The cutting tool (**100**) of any of claims 1 to 2, wherein the pivot axis (**Y-Y'**) is substantially perpendicular with respect to the longitudinal axis (**X-X'**).

4. The cutting tool (**100**) of any of claims 1 to 3, wherein an angular range of rotation of the pair of cutting blades (**112**) about the pivot axis (**Y-Y'**) is greater than **200**°**.**

5. The cutting tool (**100**) of any of claims 1 to 3, wherein an angular range of rotation of the pair of cutting blades (**112**) about the pivot axis (**Y-Y'**) is more than 180°, in particular **210**° **to 230**°**.**

6. The cutting tool (**100**) of any of claims 1 to 5, wherein the cord (**316**) passes from the first pulley (**304**) to the second pulley (**306**) along an axis **W-W'**, such that the axis **W-W'** is orthogonal to the longitudinal axis **X-X'.**

## Patentansprüche

1. Schneidwerkzeug (100), umfassend:
einen Längshebel (102) mit einem ersten Ende (104) und einem zweiten Ende (106), wobei der Längshebel (102) eine Längsachse (X-X'), die sich zwischen jeweils dem ersten Ende (104) und dem zweiten Ende (106) erstreckt, definiert;
einen Griffabschnitt, der in Richtung des ersten Endes (104) des Längshebels (102) definiert ist;
ein Schwenkgehäuse (108), das mit dem zweiten Ende (106) des Längshebels (102) gekoppelt ist, wobei das Schwenkgehäuse (108) angepasst ist, um sich um eine Schwenkachse (Y-Y') zu drehen; und
ein Schneidklingenpaar (112), die mit dem Schwenkgehäuse (108) gekoppelt sind, so dass sich das Schneidklingenpaar (112) zusammen mit dem Schwenkgehäuse (108) um die Schwenkachse (Y-Y') dreht;
wobei das Schneidwerkzeug (100) ferner ein Kopplungselement (110) umfasst, das angepasst ist, um das Schwenkgehäuse (108) mit dem zweiten Ende (106) des Längshebels (102) zu koppeln, so dass die Schwenkachse (Y-Y') zur Längsachse (X-X') mit einem Versatz (O) angeordnet ist, wobei der Versatz (O) zwischen der Schwenkachse (Y-Y') und der Längsachse (X-X') es ermöglicht, dass das Schneidklingenpaar (112) in eine Position neben dem Längshebel (102) gedreht wird;
wobei ferner einen Schnur- und Riemenscheibenmechanismus (302) enthalten sind, die in Verbindung mit jedem von dem Längshebel (102), dem Griffabschnitt, dem Schwenkgehäuse (108), dem Schneidklingenpaar (112) und dem Kopplungselement (110) bereitgestellt sind, wobei der Schnur- und Riemenscheibenmechanismus (302) angepasst ist, um dem Schneidklingenpaar (112) eine Schneidwirkung zu verleihen, und
wobei der Schnur- und Riemenscheibenmechanismus (302) ferner umfasst:
eine erste Riemenscheibe (304), die eine erste Achse F-F' im Wesentlichen senkrecht zu der Längsachse X-X' definiert, und
eine zweite Riemenscheibe (306), die eine zweite Achse S-S' im Wesentlichen senkrecht zu der ersten Achse F-F' definiert,
**dadurch gekennzeichnet, dass**:
der Schnur- und Riemenscheibenmechanismus (302) ferner Folgendes umfasst:
eine dritte Riemenscheibe (308), die eine dritte Achse T-T' definiert, die im Wesentlichen senkrecht zu jeder der ersten Achse F-F' und der zweiten Achse S-S' ist,
wobei die Schnur (316) durch den Längshebel (102) geführt wird und zumindest teilweise um jede der ersten Riemenscheibe (304), der zweiten Riemenscheibe (306) und der dritten Riemenscheibe (308) geführt wird,
wobei ein Segment der Schnur (316), das zwischen der zweiten Riemenscheibe (306) und der dritten Riemenscheibe (308) geführt wird, mit der Schwenkachse Y-Y' zusammenfällt.

2. Schneidwerkzeug (100) nach Anspruch 1, wobei das Schneidklingenpaar (112) eine Stützklinge (114) und eine bewegliche Klinge (116) umfasst.

3. Schneidwerkzeug (100) nach einem der Ansprüche 1 bis 2, wobei die Schwenkachse (Y-Y') in Bezug auf die Längsachse (X-X') im Wesentlichen senkrecht ist.

4. Schneidwerkzeug (100) nach einem der Ansprüche 1 bis 3, wobei ein Drehwinkelbereich des Schneidklingenpaares (112) um die Schwenkachse (Y-Y') größer als 200° ist.

5. Schneidwerkzeug (100) nach einem der Ansprüche 1 bis 3, **dadurch gekennzeichnet, dass** ein Drehwinkelbereich des Schneidklingenpaares (112) um die Schwenkachse (Y-Y') mehr als 180°, insbesondere 210° bis 230°, beträgt.

6. Schneidwerkzeug (100) nach einem der Ansprüche 1 bis 5, wobei die Schnur (316) von der ersten Riemenscheibe (304) zur zweiten Riemenscheibe (306) entlang einer Achse W-W' verläuft, so dass die Achse W-W' ist orthogonal zur Längsachse X-X'.

## Revendications

1. Outil de coupe (**100**) comprenant :
un levier longitudinal **(102**) ayant une première extrémité (**104**) et une seconde extrémité (**106**), le levier longitudinal (**102**) définissant un axe longitudinal (**X-X'**) s'étendant entre chacune de la première extrémité (**104**) et de la seconde extrémité (**106**) ;
une partie de poignée définie vers la première extrémité (**104**) du levier longitudinal (**102**) ;
un boîtier de pivot (**108**) couplé à la seconde extrémité (**106**) du levier longitudinal (**102**), le boîtier de pivot (**108**) étant conçu pour tourner autour d'un axe de pivot (**Y-Y'**) ; et
une paire de lames de coupe (**112**) couplée au boîtier de pivot (**108**) de sorte que la paire de lames de coupe (**112**) tourne autour de l'axe de pivot (**Y-Y'**) avec le boîtier de pivot (**108**) ;
dans lequel l'outil de coupe (**100**) comprend en outre un élément de couplage (**110**) conçu pour coupler le boîtier de pivot (**108**) avec la seconde extrémité (**106**) du levier longitudinal (**102**) de sorte que l'axe de pivot (**Y-Y'**) est disposé suivant un décalage (**O**) par rapport à l'axe longitudinal (**X-X'**), dans lequel le décalage (**O**) entre l'axe de pivot (**Y-Y'**) et l'axe longitudinal (**X-X'**) permet à la paire de lames de coupe (**112**) d'être tournée dans une position adjacente au levier longitudinal (**102**) ;
comprenant en outre un mécanisme de cordon et de poulie (**302**) prévu en association avec chacun du levier longitudinal (**102**), de la partie de poignée, du boîtier de pivot (**108**),
de la paire de lames de coupe (**112**), et de l'élément de couplage (**110**), le mécanisme de cordon et de poulie (**302**) étant conçu pour fournir une action de coupe à la paire de lames de coupe (**112**)
et dans lequel le mécanisme de cordon et de poulie (**302**) comprend en outre :
une première poulie (**304**) définissant un premier axe **F-F'** sensiblement perpendiculaire à l'axe longitudinal **X-X'** et
une deuxième poulie (**306**) définissant un deuxième axe **S-S'** sensiblement perpendiculaire au premier axe **F-F'**,
**caractérisé en ce que :**
le mécanisme de cordon et de poulie (**302**) comprend en outre :
une troisième poulie (**308**) définissant un troisième axe **T-T'** qui est sensiblement perpendiculaire par rapport à chacun du premier axe **F-F'** et du deuxième axe **S-S'**,
de sorte que le cordon (**316**) est acheminé à travers le levier longitudinal (**102**) et est, au moins partiellement, acheminé autour de chacune de la première poulie (**304**), de la deuxième poulie (**306**) et de la troisième poulie (**308**),
un segment du cordon (**316**) acheminé entre la deuxième poulie (**306**) et la troisième poulie (**308**) coïncidant avec l'axe de pivot **Y-Y'**.

2. Outil de coupe (**100**) selon la revendication 1, dans lequel la paire de lames de coupe (**112**) comprend une lame de support (**114**) et une lame mobile (**116**).

3. Outil de coupe (**100**) selon l'une quelconque des revendications 1 à 2, dans lequel l'axe de pivot (**Y-Y'**) est sensiblement perpendiculaire par rapport à l'axe longitudinal (**X-X'**)**.**

4. Outil de coupe**(100)** selon l'une quelconque des revendications 1 à 3, dans lequel une plage angulaire de rotation de la paire de lames de coupe (**112**) autour de l'axe de pivot (**Y-Y'**) est supérieure à **200°.**

5. Outil de coupe (**100)** selon l'une quelconque des revendications 1 à 3, dans lequel une plage angulaire de rotation de la paire de lames de coupe (**112**) autour de l'axe de pivot (**Y-Y'**) est supérieure à 180°, en particulier comprise entre **210° et 230°.**

6. Outil de coupe (**100)** selon l'une quelconque des revendications 1 à 5, dans lequel le cordon (**316**) passe de la première poulie (**304**) à la deuxième poulie (**306**) selon un axe **W-W'**, tel que l'axe **W-W'** est orthogonal à l'axe longitudinal **X-X'.**
